# DEMANDE DE BREVET EUROPEEN

(11) **EP 0 624 854 A1**
(43) Date de publication de la demande: **17.11.1994**
(21) Numéro de dépôt: 94400991.9
(22) Date de dépôt: 06.05.1994
(51) Int. Cl.: G06K 11/18

(54) **Surface de déplacement pour "souris" d'ordinateur**

(30) Priorité: 12.05.1993 FR 9305687
(71) Demandeur: BULL S.A., F-92800 Puteaux (FR)
(72) Inventeur: Vilas-Boas, Jean-Claude, F-95110 Sannois (FR); Poyet, Christian, F-59370 Mons en Baroeul (FR)

(57) **Abrégé**

Cette surface de déplacement (1) pour "souris" d'ordinateur est destinée à être déposée sur un plan de travail quelconque. Elle comporte une partie supérieure (2) plane rigide et grenée en un matériau antistatique pour assurer le déplacement de la "souris" et d'une partie inférieure (3) antidérapante en contact avec le plan de travail. De manière remarquable, la surface de déplacement (1) est constituée d'un matériau monocomposant en fine plaque munie sur sa face inférieure d'au moins une surface adhésive (3) permettant son maintien et son application directement dans une position désirée. De préférence le matériau monocomposant est transparent pour laisser apparaître, tout en le protégeant un graphisme constitué par la ou les surfaces adhésives de couleurs et de formes déterminées.

## Description

La présente invention concerne une surface de déplacement pour "souris" d'ordinateur destinée à être déposée sur un plan de travail et comportant une partie supérieure plane, rigide et grenée en un matériau antistatique pour assurer le déplacement de la "souris" et d'une partie inférieure antidérapante en contact avec le plan de travail.

De manière générale, une "souris" contrôle un pointeur visualisé sur l'écran de l'ordinateur. En déplaçant la "souris" sur un plan de travail le pointeur est en même temps déplacé sur l'écran et permet de pointer sur un élément visualisé. Il doit exister une relation linéaire précise entre le déplacement de la "souris" sur le plan de travail et celui du pointeur sur l'écran. Plus précisémment, le mouvement linéaire de la "souris" par rapport au plan de travail est converti en un mouvement de rotation par l'intermédiaire de la petite sphère tournant sur le socle de la "souris" et les mouvements de la sphère sont à leur tour convertis en signaux envoyés à l'ordinateur qui déplace le pointeur en conséquence. Lorsque la surface de travail comporte des imperfections (creux ou bosses), ou lorsqu'elle est trop lisse ou trop poussiéreuse, la relation linéaire entre ce déplacement de la "souris" et celui du pointeur sur l'écran ne peut être conservée avec précision. Pour remédier à cet inconvénient, il est courant d'interposer une surface de déplacement ayant des caractéristiques déterminées entre la "souris" et le plan de travail.

Une telle surface de déplacement, également appelée "tapis de souris", est par exemple décrite dans la demande internationale publiée sous le numéro WO 89/05734. Dans cette demande, deux couches distinctes et d'épaisseur non négligeable forment la partie supérieure et la partie inférieure du tapis. La partie supérieure est aussi plane que possible, d'une certaine dureté et de préférence réalisée dans un matériau possédant des propriétés antistatiques et de manière optionnelle transparent. La surface sur laquelle est déplacée la "souris" est grenée, c'est-à-dire qu'elle comporte un grand nombre de petites protubérances de hauteur identique et disposées de manière aléatoire. La partie inférieure quant à elle est constituée d'une couche épaisse de mousse, elle présente ainsi une surface antidérapante de manière à conserver une position déterminée relativement au plan de travail sur lequel ledit tapis est posé.

L'utilisation d'une telle surface de déplacement ou tapis entraîne divers inconvénients. Ainsi lors du déplacement de la "souris", il peut arriver que cette dernière sorte des limites du tapis créant ainsi une discontinuité due au dénivellement existant entre la surface de travail et le tapis. A l'inverse, lorsque la "souris" est sortie des limites du tapis, il est alors obligatoire de soulever la "souris" et de la reposer sur ledit tapis. Tout ceci crée un inconfort d'utilisation, oblige à réitérer certaines opérations et nuit par conséquent à la précision des mouvements nécessaire à un positionnement correct du pointeur sur l'écran. En outre, un tapis de ce type, de par son épaisseur et donc son volume encombre le plan de travail. Enfin son coût de production n'est pas non plus négligeable.

La présente invention a pour but de remédier aux divers inconvénients présentés par le tapis de l'art antérieur et propose une surface de déplacement d'un grand confort d'utilisation, de faible encombrement et de coût significativement réduit.

Pour cela la surface de déplacement pour "souris" d'ordinateur du type mentionné dans le préambule est remarquable en ce qu'elle est constituée d'un matériau plastique monocomposant en fine plaque munie sur sa face inférieure d'au moins une surface adhésive permettant son maintien dans une position désirée et son application directement sur un quelconque plan de travail.

Ainsi la surface de déplacement est de très faible épaisseur, elle est donc discrète, peu encombrante et présente un grand confort d'utilisation car elle permet un déplacement précis même lorsque la "souris" sort de ses limites. De même, sa faible épaisseur autorise une remontée et un repositionnement de la "souris" sur ladite surface de manière aisée, par le simple roulement de la sphère portée par la "souris" qui n'a qu'un très faible obstacle à franchir, et ceci tout en continuant de regarder le pointeur sur l'écran. Le matériau plastique monocomposant en fine plaque rigide est directement applicable sur un plan de travail, le maintien dans la position désirée étant obtenu par l'intermédiaire d'une ou plusieurs surfaces adhésives appliquée(s) sur la face inférieure permettant une adaptation sur tous types de support. La surface peut être recouverte par des documents lorsqu'elle n'est pas utilisée par la "souris" tout en conservant sa position grâce à sa partie adhésive en contact avec le plan de travail. Un autre avantage apparaît du fait du choix d'un matériau monocomposant, ce dernier étant par conséquent recyclable. Enfin, la fabrication d'une telle surface est considérablement simplifiée et son coût par conséquent très sensiblement réduit.

De manière remarquable, le matériau plastique constituant la surface de déplacement selon l'invention est transparent sur l'intégralité de son épaisseur, alors que la ou les surfaces adhésives est ou sont d'au moins une couleur et représente(nt) un graphisme, le matériau plastique transparent protégeant et laissant apparaître ledit graphisme.

Ainsi, lorsqu'il est désiré faire apparaître un graphisme tel qu'une marque, un logo, un message publicitaire, une personnalisation d'une fonction au moyen d'une image, une représentation quelconque, ledit graphisme est constitué directement par la ou les surfaces adhésives appliquée(s) sur la partie inférieure de la surface de déplacement et se trouve alors protégé puisque se situant en-dessous de la surface de déplacement. Une telle représentation peut s'avérer pratique et conviviale.

De manière efficace, les surfaces adhésives sont disposées et réparties de sorte à former un quadrillage d'éléments de dimensions et de formes déterminées pour assurer le placage et le maintien de la surface de déplacement alors que l'ensemble des éléments représentent un graphisme. En effet une répartition judicieuse d'éléments adhésifs entraîne un placage et un maintien parfaits dans la position désirée.

La surface de déplacement de la "souris" n'est pas nécessairement de grande dimension. Ainsi, pour que le pointeur puisse décrire la totalité de la surface de l'écran, une zone circulaire d'environ 12 cm de diamètre sera généralement suffisante pour le déplacement corrélatif de la "souris". Par conséquent, toute surface dans laquelle peut être inscrite une zone circulaire de plus de 12cm de diamètre peut convenir.

Cependant, de préférence, la surface de déplacement est choisie de forme sensiblement circulaire. Une telle forme, en réalité, présente un côté pratique pour l'opérateur qui pourra déposer ladite surface de déplacement sans contrainte particulière sur le plan de travail. Alors que, effectivement, l'opérateur a tendance à vouloir aligner une forme rectangulaire par rapport à une référence, il n'aura pas cette propension avec une forme circulaire qui s'intègre visuellement naturellement dans un ensemble tel qu'un ensemble bureautique comprenant généralement des formes parallélipipédiques (écran, moniteur, clavier,...). Une surface d'une telle forme peut contribuer également à l'esthétique du poste de travail et ceci d'autant plus qu'elle peut, en outre, constituer un support personnalisé.

La description succincte suivante en regard des dessins annexés, le tout donné à titre d'exemple non limitatif, fera bien comprendre comment l'invention peut être réalisée.

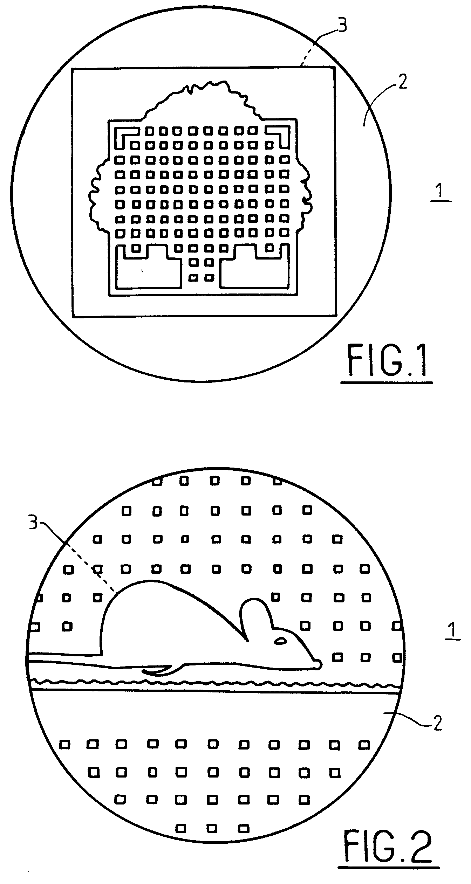

Les figures 1 et 2 représentent deux exemples de surface de déplacement 1 pour "souris" d'ordinateur selon l'invention destinée à être déposée sur un plan de travail. La surface de déplacement 1 comporte une partie supérieure 2 plane rigide et grenée en un matériau antistatique sur laquelle est déplacée une "souris" d'ordinateur et une partie inférieure 3 antidérapante qui est mise en contact avec le plan de travail.

Conformément à l'invention, la surface de déplacement 1 est constituée d'un matériau plastique monocomposant en fine plaque munie sur sa face inférieure d'au moins une surface adhésive 3 permettant son maintien dans une position désirée et son application directement sur un quelconque plan de travail.

La surface de déplacement 1 peut être constituée de tout matériau en matière plastique permettant l'écoulement des charges électrostatiques et n'attirant pas de poussières, nuisibles au bon fonctionnement de la "souris". De manière préférée, le matériau plastique antistatique monocomposant est un polypropylène.

Le matériau choisi est de préférence transparent sur l'intégralité de son épaisseur alors que les surfaces adhésives 3 sont d'au moins une couleur et représentent un graphisme (figure 1 : un arbre, figure 2 : une souris) que le matériau transparent laisse apparaître tout en le protégeant. Les surfaces adhésives 3 sont disposées et réparties, comme cela est montré sur les figures, de manière à former une quadrillage d'éléments de dimensions et de formes déterminées, par exemple des petits carrés entourés ou entourant le graphisme, pour assurer de manière judicieuse le placage et le maintien de la surface de déplacement 1 sur le plan de travail.

Les surfaces adhésives sont par exemple constituées d'un matériau adhésif double face, adhérant d'une part à la partie inférieure de la surface de déplacement 1 et permettant d'autre part, d'adhérer au plan de travail.

Egalement, sur les figures, les surfaces de déplacement 1 sont avantageusement représentées selon une forme circulaire.

## Revendications

1. Surface de déplacement pour "souris" d'ordinateur destinée a être déposée sur un plan de travail et comportant une partie supérieure plane et rigide et grenée en un matériau antistatique pour assurer le déplacement de la "souris" et d'une partie inférieure antidérapante en contact avec le plan de travail, caractérisée en qu'elle est constituée d'un matériau plastique monocomposant en fine plaque munie sur sa face inférieure d'au moins une surface adhésive permettant son maintien dans une position désirée et son application directement sur un quelconque plan de travail.

2. Surface de déplacement pour "souris" d'ordinateur selon la revendication 1, caractérisée en ce qu'en outre, le matériau plastique est transparent sur l'intégralité de son épaisseur alors que la ou les surfaces adhésives est ou sont d'au moins une couleur et représente(nt) un graphisme, le matériau plastique transparent protégeant et laissant apparaître ledit graphisme.

3. Surface de déplacement pour "souris" d'ordinateur selon la revendication 2, caractérisée en ce que les surfaces adhésives sont disposées et réparties de manière à former un quadrillage d'éléments de dimensions et de formes déterminées pour assurer la placage et le maintien de la surface de déplacement alors que l'ensemble des éléments représentent un graphisme.

4. Surface de déplacement pour "souris" d'ordinateur selon l'une des revendications précédentes, caractérisée en ce qu'elle est de forme sensiblement circulaire.

5. Surface de déplacement pour "souris" d'ordinateur selon l'une des revendications précédentes, caractérisée en ce que le matériau peut être par exemple un polypropylène.
